(19) Europäisches Patentamt

European Patent Office

Office européen des brevets

(11) **EP 0 765 056 A1**

## (12) DEMANDE DE BREVET EUROPEEN

(43) Date de publication:
26.03.1997 Bulletin 1997/13

(51) Int. Cl.⁶: **H04L 12/433**

(21) Numéro de dépôt: 96202558.1

(22) Date de dépôt: 12.09.1996

(84) Etats contractants désignés:
**DE FR GB IT SE**

(30) Priorité: **20.09.1995 FR 9511036**

(71) Demandeurs:
• **PHILIPS COMMUNICATION D'ENTREPRISE**
**75013 Paris (FR)**
Etats contractants désignés:
**FR**

• **PHILIPS ELECTRONICS N.V.**
**5621 BA Eindhoven (NL)**
Etats contractants désignés:
**DE GB IT SE**

(72) Inventeur: **Damien, Souad**
**75008 Paris (FR)**

(74) Mandataire: **Chaffraix, Jean et al**
**Société Civile S.P.I.D.**
**156, Boulevard Haussmann**
**75008 Paris (FR)**

(54) **Réseau fédérateur et mécanisme d'allocation de ressources d'un tel réseau**

(57) L'invention concerne un réseau d'interconnexion d'équipements de réseaux par l'intermédiaire d'un anneau à commutation par paquets. Elle a pour but d'optimiser l'accès des équipements à l'anneau en répartissant en permanence la capacité de l'anneau de façon optimale entre les différents équipements actifs.

Pour cela, l'invention consiste à faire circuler sur l'anneau une information représentative de la partie utilisée de la capacité de l'anneau de telle sorte qu'un équipement puisse à tout instant insérer dans une trame de transport un nombre de paquets correspondant à un droit minimum d'émission qui lui est garanti, la partie inutilisée de la capacité de l'anneau étant de plus répartie entre les équipements.

Applications: anneaux fédérateurs, ATM, RNIS large bande

FIG.1

EP 0 765 056 A1

**Description**

L'invention concerne un réseau comportant une pluralité d'équipements de réseaux interconnectés par un anneau qui véhicule des trames de transport à un débit qui détermine la capacité de l'anneau, ladite capacité se composant d'une partie utilisée et d'une partie inutilisée.

L'invention concerne également un équipement de réseau destiné à être interconnecté avec au moins un autre équipement de réseau par un anneau qui véhicule des trames de transport à un débit qui détermine la capacité de l'anneau, ladite capacité se composant d'une partie utilisée et d'une partie inutilisée.

L'invention concerne enfin un procédé de gestion de l'accès à un anneau d'interconnexion d'une pluralité d'équipements de réseau, ledit anneau véhiculant des trames de transport à un débit qui détermine la capacité de l'anneau, ladite capacité se composant d'une partie utilisée et d'une partie inutilisée.

L'invention a d'importantes applications dans le domaine des réseaux locaux notamment, et plus particulièrement dans le domaine des anneaux fédérateurs utilisant un protocole ATM (de l'anglais Asynchronous Transfert Mode), pour les réseaux RNIS large bande par exemple.

L'un des problèmes qui se pose dans ce type de réseaux est celui du partage de la capacité de l'anneau entre les différents équipements de réseaux. La technique du jeton, qui est notamment décrite au chapitre 3.4.3 de l'ouvrage intitulé "Réseaux, Architectures, Protocoles, Applications" de Andrew Tanenbaum publié par InterEditions en 1990, constitue la solution classique apportée à ce problème pour des anneaux de type Token Ring, FDDI... Elle consiste à faire circuler en permanence entre les équipements de réseaux, lorsqu'ils n'ont rien à transmettre, une séquence binaire particulière appelée jeton. Lorsqu'un équipement veut transmettre une trame, il doit prendre possession du jeton et le remplacer sur l'anneau par la trame qu'il souhaite transmettre. Un seul équipement peut donc transmettre à un instant donné, ce qui oblige tous les autres à différer leur demande.

L'invention a notamment pour but de proposer une méthode de gestion de l'accès à un anneau qui ne présente pas cet inconvénient, ainsi qu'un réseau et un équipement de réseaux dans lesquels une telle méthode est appliquée.

Pour cela, un réseau selon l'invention et tel que décrit dans le paragraphe introductif est caractérisé en ce qu'il comporte:

- des moyens pour faire circuler sur l'anneau une information représentative de la partie utilisée de la capacité de l'anneau, et mise à jour par lesdits équipements,
- des moyens pour accorder auxdits équipements un droit d'émission qui dépend notamment de la partie inutilisée de la capacité de l'anneau.

Dans un mode de réalisation particulièrement avantageux, le réseau selon l'invention comporte des moyens pour répartir la capacité de l'anneau entre équipements:

- en attribuant à chaque équipement un droit minimum d'émission,
- en répartissant la partie inutilisée de la capacité de l'anneau entre équipements en fonction d'une loi de partage entre équipements.

L'invention permet donc d'optimiser l'accès des équipements à l'anneau en répartissant en permanence la capacité de l'anneau de façon optimale entre les différents équipements actifs. En effet, une information représentative de la partie utilisée de la capacité de l'anneau circule en permanence sur l'anneau de telle sorte qu'à tout instant un équipement peut insérer dans une trame de transport au moins un nombre de paquets correspondant au droit minimum d'émission qui lui est garanti, la partie inutilisée de la capacité de l'anneau étant de plus répartie entre les équipements actifs.

L'invention sera mieux comprise et d'autres détails apparaîtront à la lumière de la description qui va suivre en regard des dessins annexés qui sont donnés à titre d'exemple non limitatif et dans lesquels:

- la figure 1 représente un premier mode de réalisation d'un réseau selon l'invention,
- la figure 2 représente un organigramme de fonctionnement d'un équipement d'un tel réseau,
- la figure 3 est un organigramme d'un procédé de mise à jour de l'information, relative à l'utilisation de la bande passante, qui est véhiculée sur l'anneau,
- la figure 4 est un organigramme d'un procédé de calcul du nombre de paquets à insérer dans une trame de transport par un équipement du réseau,
- la figure 5 représente un second mode de réalisation d'un réseau selon l'invention,
- la figure 6 est un organigramme d'un procédé de répartition du droit d'émission entre liaisons gérées par un même concentrateur dans le mode de réalisation de la figure 5,
- la figure 7 représente un troisième mode de réalisation d'un réseau selon l'invention,
- la figure 8 représente schématiquement un équipement selon l'invention destiné à être utilisé dans un réseau tel que celui représenté sur la figure 5.

Dans la description qui va suivre, on considère à titre d'exemple un anneau qui utilise un mode de commutation ATM (Asynchronous transfert mode) et qui véhicule des trames au format SDH (Synchronous Digital Hierachy). L'invention n'est toutefois pas limitée à cet exemple de réalisation. Elle est également applicable à d'autres protocoles de transmission par paquets de taille constante, ou à des protocoles qui autorisent à couper les paquets. De même, d'autres formats de trames de transport sont utilisables, par exemple le format PDH.

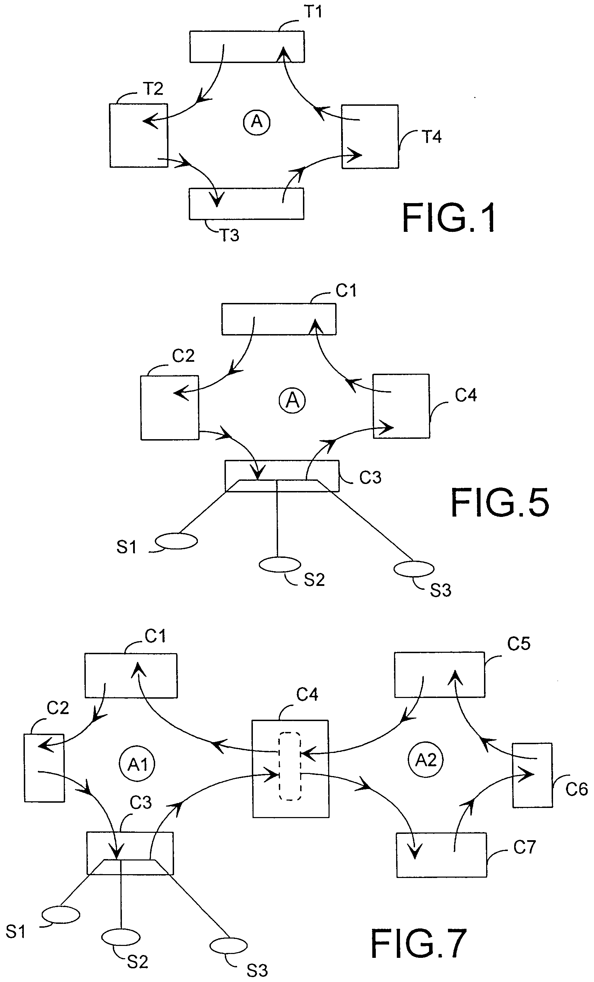

La figure 1 représente un réseau comportant quatre stations T1, T2, T3 et T4 interconnectées par un anneau A qui est un anneau ATM véhiculant des trames SDH. Chaque station possède une unité de traitement permettant de découper tous les types de trafic en unités de données de longueur fixe, appelés cellules dans la suite de la description.

Conformément à la norme ATM, chaque cellule comporte un entête de 5 octets qui contient notamment des identificateurs de conduits et de voies logiques respectivement notés VPI (Virtual Path Identifier) et VCI (Virtual Circuit Identifier) permettant d'adresser la cellule dans le réseau, ledit entête étant suivi de 48 octets d'informations utiles.

En émission, les stations découpent donc les informations à transmettre en blocs de 48 octets et ajoutent l'entête de 5 octets contenant les identificateurs (VPI, VCI) de la station destinatrice de la cellule. Puis la cellule est stockée dans une mémoire dite mémoire d'émission. Ces cellules sont ensuite mises en trames dans des trames de transport SDH véhiculées sur l'anneau A. Ces trames doivent comporter un nombre constant de cellules correspondant à leur débit; elles sont donc éventuellement complétées par des cellules vides. Ces cellules sont identifiables à partir de leurs identificateurs (VPI, VCI) et de leur contenu utile qui ont des valeurs fixes normalisées par le CCITT.

En réception, les stations extraient de la trame de transport les cellules qui leur sont destinées, les stockent dans une mémoire dite mémoire de réception et réassemblent les messages à destination des différentes applications.

Le problème que l'invention se propose de résoudre est celui du partage des ressources de l'anneau A entre les différentes stations.

Selon l'invention, un droit minimum d'émission est garanti à chaque station et à tout instant la partie inutilisée de la capacité de l'anneau est répartie entre les différentes stations en fonction d'une loi de partage entre équipements. Dans la suite de la description, on considère que cette loi de partage est une répartition proportionnelle au droit minimum d'émission qui est garanti à chaque station. L'invention n'est toutefois pas limitée à ce mode de réalisation et d'autres types de répartition sont envisageables, par exemple une répartition fonction d'une priorité attribuée à chaque station.

Ainsi, le droit minimum d'émission garanti à chaque station correspond au nombre de cellules qu'une station peut émettre lorsque l'anneau est chargé au maximum. A l'inverse, chaque station peut utiliser jusqu'à la totalité de la capacité de l'anneau lorsqu'aucune des autres stations n'est active.

L'invention implique donc d'une part de transmettre sur l'anneau et de mettre à jour au niveau de chaque station une information représentative de la partie effectivement utilisée de la capacité maximum de l'anneau, et d'autre part d'utiliser cette information pour répartir au niveau de chaque station la partie inutilisée de cette capacité maximum.

Cette information, appelée taux de charge de l'anneau dans la suite de la description, est véhiculée dans chaque trame SDH circulant sur l'anneau. Lorsqu'une station a des cellules à transmettre dans sa mémoire d'émission, elle en informe toutes les autres en augmentant de la valeur de son droit minimum d'émission le taux de charge véhiculé dans la trame. De la même manière, lorsqu'une station n'a plus de données à émettre, elle en informe les autres stations en diminuant de la valeur de son droit minimum d'émission le taux de charge contenu dans les trames qui circulent sur l'anneau.

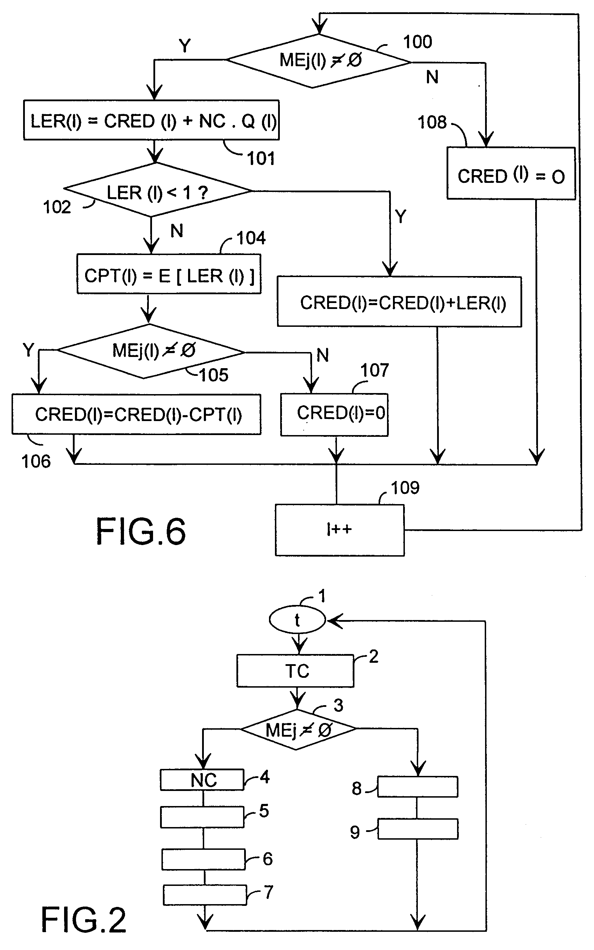

La figure 2 résume sous forme d'organigramme le fonctionnement d'une station j d'un réseau selon l'invention lorsqu'elle reçoit une trame de transport.

A la case 1, la station est en attente de réception d'une trame de transport t. Lorsqu'elle est reçue, la station met à jour le taux de charge contenu dans cette trame (case 2). Puis, si sa mémoire d'émission MEj contient des cellules à transmettre (le test est effectué à la case 3), elle calcule (à la case 4) le nombre de cellules NC qu'elle est autorisée à insérer dans la trame t avant de la retransmettre sur l'anneau. A la case 5, les cellules correspondantes sont insérées dans la trame t qui est transmise à la case 6. A la case 7, l'état "actif" est affecté à une variable qui représente l'état courant de la station. Puis le procédé reprend à la case 1. Si en revanche le test effectué à la case 3 indique que la mémoire d'émission de la station ne contient aucune cellule à transmettre, la trame t est directement retransmise sur l'anneau (case 8) et la variable d'état de la station prend la valeur "inactif" (case 9). Le procédé reprend alors à la case 1.

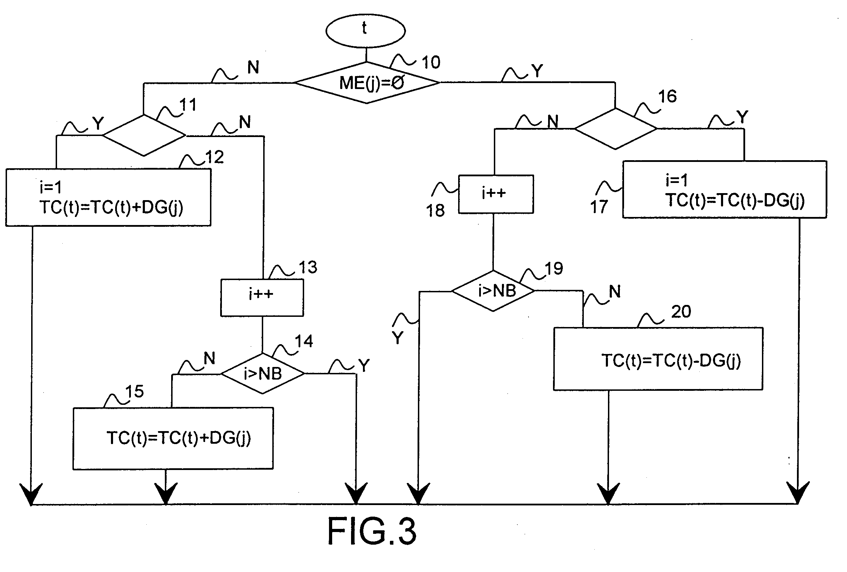

Un exemple de procédé de mise à jour du taux de charge va maintenant être décrit plus en détail, pour un premier mode de réalisation, à l'aide de l'organigramme de la figure 3.

D'une façon générale, les mises à jour (augmentation ou diminution du taux de charge) doivent être effectuées une seule fois sur chaque trame qui circule sur l'anneau. Dans ce premier mode de réalisation, le taux de charge est transmis dans l'entête de la trame de transport (on utilise les 2 octets qui ont été réservés dans l'entête de la trame SDH lors de la normalisation pour des usages non déterminés). Il est alors nécessaire que chaque station connaisse la topologie du réseau pour éviter de modifier plusieurs fois consécutives le taux de charge véhiculé par une même trame de transport (il existe autant de trames circulant sur l'anneau que de stations qui lui sont connectées).

D'après la figure 3, le procédé de mise à jour du taux de charge consiste alors à vérifier si la mémoire d'émission de la station j contient des cellules à transmettre (case 10). Dans ce cas, il est nécessaire de distinguer si la station j est ou non dans un état inactif (ce test est effectué à la case 11). Si la station j est inactive, cela signifie que la trame reçue t est la première pour laquelle la station j a des cellules à émettre. Un compteur i est alors initialisé à la valeur 1 et le taux de charge TC(t) est augmenté de la valeur du droit minimum d'émission DG(j) affecté à la station j (case 12). En revanche si la station j est active, le compteur i est incrémenté de 1 (case 13), et le taux de charge n'est mis à jour (case 15) que si i est inférieur ou égal au nombre de stations NB connectées sur l'anneau (test effectué à la case 14).

Si la mémoire d'émission de la station j ne contient pas de cellules à transmettre, et si la station est dans un état actif (test effectué à la case 16), cela signifie qu'il s'agit de la première trame pour laquelle la station j n'a pas de cellules à émettre. Le compteur i est initialisé à la valeur 1 et le taux de charge est diminué de la valeur du droit minimum d'émission DG(j) de la station j (case 17). En revanche si la station est dans un état inactif, le compteur i est incrémenté (case 18) et le taux de charge n'est alors mis à jour (case 20) que si le compteur i est inférieur ou égal au nombre de stations NB connectées sur l'anneau (test effectué à la case 19).

Dans ce mode de réalisation, le taux de charge est diminué de la valeur du droit minimum d'émission DG(j) de la station j dès réception d'une trame pour laquelle la mémoire d'émission de la station est vide. Il est toutefois possible d'attendre la trame suivante afin de ne mettre à jour le taux de charge que si la mémoire d'émission est toujours vide, pour éviter des modifications trop fréquentes de la valeur du taux de charge dues à des baisses temporaires du trafic.

Dans un second mode de réalisation, le taux de charge de l'anneau est véhiculé dans la première cellule utile de la trame. Ce mode de réalisation présente par rapport au précédent l'avantage d'autoriser un nombre d'octets largement supérieur pour coder l'information de taux de charge. Ces octets peuvent notamment être utilisés par chaque station pour signer toute mise à jour du taux de charge. Il n'est alors plus nécessaire que chaque station connaisse la topologie du réseau pour mettre à jour l'information de taux de charge.

L'information de taux de charge ainsi mise à jour est utilisée pour calculer le nombre de cellules que la station peut insérer dans cette trame avant de la retransmettre sur l'anneau. Ce nombre de cellules est calculé de façon optimum pour profiter au maximum de la capacité de l'anneau, sans toutefois bloquer les autres stations.

Pour cela, le droit minimum d'émission DG(j) de chaque station j est exprimé sous forme d'un nombre X de cellules toutes les N trames de transport. N est de préférence choisi égal à une puissance de 2 afin de simplifier les calculs (puisqu'une division par une puissance de 2 correspond simplement à un décalage vers la gauche ou vers la droite). N est par exemple avantageusement choisi égal à 8 afin d'offrir une gamme de débits garantis suffisamment large, allant d'une cellule toutes les 8 trames jusqu'à par exemple 40 cellules par trame, c'est-à-dire de 424 kb/s jusqu'à 135 Mb/s par pas de 424 kb/s (chaque trame SDH comportant 44 cellules ATM, le choix d'un maximum de 40 cellules par trame permet de conserver une marge de sécurité de l'ordre de 10%).

Le débit maximum Dmax de la trame de transport ainsi que le taux de charge TC(t) véhiculé dans la trame t sont également exprimés en nombre de cellules pour N trames. Par la suite on utilise les notations suivantes:

$$Dmax = Xmax/N$$

$$TC(t) = Xt/N$$

Lorsqu'une station a des données à émettre, elle calcule son droit d'émission pour la trame courante qui se compose d'un premier nombre Z1 de cellules correspondant au droit minimum d'émission qui lui est garanti, auquel s'ajoutent un second nombre Z2 de cellules correspondant à la part de la partie inutilisée de la capacité de l'anneau qui lui est attribuée, et d'un troisième nombre de cellules Z3 qui correspond à un crédit d'émission de la station. Ce crédit d'émission est égal au nombre de cellules que la station n'a pas pu émettre dans les trames précédentes soit par manque de place disponible, soit parce qu'on ne peut émettre dans chaque trame qu'un nombre entier de cellules (un droit d'émission de X/N cellules pour une trame correspond à l'émission effective, dans la mesure de la place disponible, de E(X/N) cellules où E représente la fonction partie entière, et la partie restante est accumulée dans une variable, dite crédit d'émission, de telle sorte qu'au bout de N trames on ait effectivement transmis X cellules.)

Le rapport droit minimum d'émission garanti à la station j, sur débit maximum de la trame de transport, est calculé une fois pour toute pour chaque station. Il est noté Kj ( Kj=Xj/Xmax ). En tenant compte de ce qui précède, le droit d'émission ERj d'une station j pour une trame t s'exprime donc de la façon suivante:

$$ERj = Z1 + Z2 + Z3$$

$$ERj = Xj/N + [(Xmax - Xt)/N].[Xj/Xmax] + Z3$$

$$ERj = [2Xj - Kj.Xt]/N + Z3$$

Si N est une puissance de 2, le temps de calcul du droit d'émission correspond à un décalage et à une multiplication-addition ce qui ne nécessite que quelques cycles d'horloge c'est-à-dire un temps de l'ordre de quelques dizaines de nanosecondes avec les technologies actuelles.

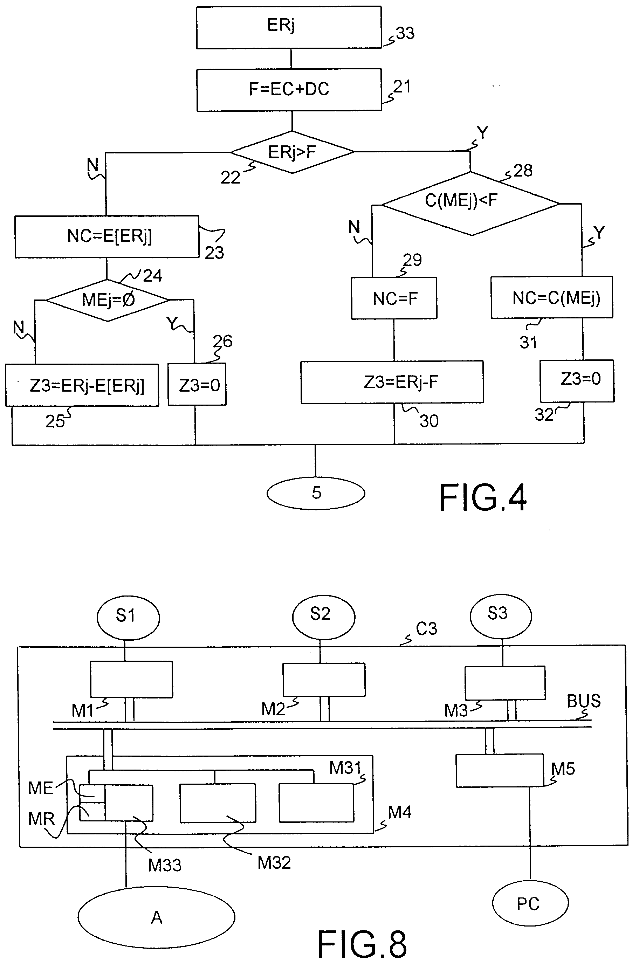

Chaque station émet donc, dans la mesure de la place disponible dans la trame de transport, un nombre de cellules égal à la partie entière de son droit d'émission conformément à un procédé tel que celui décrit ci-dessous à titre d'exemple en référence à la figure 4.

A la case 33, le droit d'émission ERj de la station j est calculé en tenant compte du taux de charge extrait de la trame t reçue et préalablement mis-à-jour conformément au procédé décrit sur la figure 3. Puis, à la case 21, le nombre d'emplacements libres F dans la trame t est calculé. Il est égal au nombre de cellules vides EC véhiculées dans la trame, auquel s'ajoute le nombre d'emplacements DC correspondant aux cellules qui étaient destinées à la station j et qui ont donc préalablement été extraites par cette dernière.

Si le droit d'émission de la station est inférieur ou égal au nombre d'emplacements disponibles (test effectué à la case 22), la station est autorisée à insérer NC=E[ERj] cellules dans la trame (case 23). Si la station a encore des données à émettre (test effectué à la case 24), elle met-à-jour à la case 25 son crédit d'émission Z3 qui prend alors la valeur suivante:

$$Z3 = ERj - E[ERj]$$

Sinon, elle remet son crédit d'émission à zéro (case 26).

En revanche, si le droit d'émission de la station est supérieur au nombre d'emplacements libres, alors, si la station a suffisamment de cellules à émettre (test effectué à la case 28; le nombre de cellules contenues dans la mémoire d'émission MEj de la station j est noté C(MEj) sur la figure 4), elle est autorisée à émettre un nombre de cellules NC égal au nombre d'emplacements libres F(case 29). Puis la station met-à-jour son crédit d'émission Z3 à la case 30:

$$Z3 = ERj - F$$

Sinon, le nombre de cellules à émettre étant inférieur au nombre d'emplacements libres, la station est autorisée à émettre toutes ses cellules (case 31) puis elle remet son crédit d'émission Z3 à zéro (case 32).

A l'issu des cases 25, 26, 30 et 32, le procédé reprend à la case 5 de l'organigramme de la figure 2.

Un second mode de réalisation d'un réseau selon l'invention est représenté à titre d'exemple sur la figure 5. Le réseau représenté sur la figure 5 est un réseau fédérateur reliant quatre concentrateurs de services C1, C2, C3 et C4 par l'intermédiaire d'un anneau A. Chaque concentrateur constitue une interface entre l'anneau ATM et différents abonnés (le concentrateur C3 par exemple constitue une interface entre l'anneau A et les services S1, S2 et S3), et gère non plus une seule connexion mais plusieurs couples d'identificateurs (VPI, VCI). Dans un mode de réalisation particulièrement simple, on attribue un identificateur VPI à chaque concentrateur, les services qui en dépendent étant identifiés par un identificateur VCI qui leur est propre.

Lorsqu'une trame de transport arrive au niveau d'un concentrateur, il en extrait toutes les cellules destinées à ses propres abonnés en analysant les champs VPI des entêtes des cellules de la trame, et il insère dans la trame les cellules de sa mémoire d'émission qui sont à destination des autres concentrateurs du réseau. Cette mémoire d'émission du concentrateur regroupe les cellules provenant des différents services. Elle est organisée par liaisons VCI. Le droit d'émission de chaque concentrateur, calculé comme cela a été indiqué ci-dessus, doit donc être réparti entre chacun des abonnés qu'il gère.

Dans un mode de réalisation avantageux cette répartition est proportionnelle au débit de transmission de chaque service, et les cellules inutilisées par un service sont remises à disposition des autres services proportionnellement à leur débit respectif. De plus, pour une trame de transport donnée, l'attribution d'un certain nombre de cellules par service se fait par ordre de débit de transmission décroissant.

Pour cela, on définit pour chaque liaison l:

- un coefficient de liaison Q(l) représentant la proportion du débit de la liaison l par rapport au droit minimum d'émission du concentrateur j:

$$Q(l) = D(l)/DG(j)$$

- un crédit d'émission CRED(l),
- un droit d'émission LER(l) qui est égal à la somme du crédit d'émission de la liaison CRED(l) et du produit de son coefficient de liaison Q(l) par le nombre de cellules NC que le concentrateur est autorisé à insérer dans la trame,
- un compteur de cellules initialisé à l'arrivée de chaque trame de transport. Ce compteur est appelé compteur d'émission dans la suite de la description et il est noté CPT(l).

Un exemple de procédé de répartition du nombre de cellules NC à insérer dans une trame entre les différentes liaison gérées par le concentrateur va maintenant être décrit en référence à la figure 6.

Pour chaque liaison, par ordre de débit décroissant, on vérifie tout d'abord si la mémoire d'émission du concentrateur contient des données à émettre (case 100). Dans ce cas, on calcule son droit d'émission LER(l) (case 101). S'il est inférieur à 1 (le test est effectué à la case 102), on ajoute au crédit d'émission CRED(l) de la liaison, le droit d'émission LER(l) (case 103). Sinon, le compteur d'émission de la liaison est mis à jour à la case 104: il est égal à la partie entière du droit d'émission de la liaison. Puis on vérifie à la case 105 s'il reste des données à transmettre dans la mémoire d'émission du concentrateur pour la liaison l. Dans ce cas le crédit d'émission de la liaison est diminué de la valeur du compteur d'émission de la liaison à la case 106. Sinon, le crédit d'émission est mis à zéro à la case 107. Enfin, si le test effectué à case 100 indique que la mémoire d'émission ne contient pas de données à émettre pour la liaison l, le crédit d'émission est mis à zéro à la case 108. A l'issue des cases 103, 106, 107 et 108 le procédé reprend pour la liaison suivante.

Lorsque ce procédé a été itéré pour chaque liaison dépendant du concentrateur, on vérifie si le droit d'émission du concentrateur a été atteint ou s'il reste encore des emplacements à attribuer. Dans ce dernier cas, on réapplique le procédé qui vient d'être décrit en soustrayant au nombre de cellules NC que le concentrateur est autorisé à insérer dans la trame le nombre total de cellules déjà émises pour l'ensemble des liaisons, pour le calcul du droit d'émission LER(l) de chacune des liaisons.

Dans un autre mode de réalisation, il est possible de ne tenir compte que des liaisons qui ont des données à émettre afin d'accélérer le processus de répartition du nombre de cellules. Pour cela, on utilise par exemple une tâche cyclique (activée toutes les 4 ou toutes les 8 trames de transport par exemple) qui calcule les coefficients Q(l) des liaisons de la manière suivante:

$$Q(l) = D(l) / \Sigma_m D(l_m)$$

où les liaisons $l_m$ sont les liaisons actives, c'est-à-dire celles qui ont des donnés à émettre. S'il y a peu de liaisons actives ce procédé permet de converger plus rapidement vers des valeurs de droit d'émission significatives pour ces liaisons.

Dans un autre mode de réalisation encore, la répartition du nombre de cellules à insérer dans la trame entre les différentes liaisons se fait par priorité tournante entre les différentes liaisons actives. Ce mode de réalisation est particulièrement adapté pour des concentrateurs gérant un petit nombre de liaisons dont les débits sont identiques.

Dans un autre mode de réalisation enfin, on établit à l'avance une table multiplexage statique fonction du débit de chaque liaison gérée par le concentrateur. Pour un concentrateur ayant un débit garanti de N cellules par unité de temps, et qui gère n liaisons L1 à Ln ayant elles-même des débits de D1 à Dn cellules par unités de temps, ce mode de réalisation consiste à construire une table de N emplacements en inscrivant de manière régulière D1 fois la liaison L1, ..., Dn fois la liaison Ln par ordre de débit de transmission décroissant. La table est ensuite comprimée pour supprimer les emplacements vides. Puis le concentrateur remplit la trame de transport, à hauteur de son droit d'émission, avec les cellules des liaisons actives en lisant cycliquement la table de multiplexage ainsi constituée. Par exemple, en supposant que le concentrateur peut émettre 10 cellules par unité de temps, et qu'il gère 5 liaisons L1 à L5 ayant respectivement des débits de 3, 3, 2, 1 et 1 cellules par unité de temps, la table de multiplexage contiendra 10 emplacements attribués dans l'ordre aux liaisons L1, L2, L3, L1, L2, L3, L1, L2, L4 et L5. Si l'une des liaisons n'a pas de données à transmettre, elle est sautée lors de la lecture de la table.

Ce mode de réalisation est donc particulièrement indiqué pour des concentrateurs gérant un petit nombre de liaisons de débits différents. En effet, dans le cas où seule la liaison L5 a des données à transmettre, on est tout de même obligé de parcourir la table dans son entier pour vérifier que les autres cellules n'ont pas de cellules à émettre, ce qui nécessite un temps d'autant plus long que le nombre de liaisons est élevé.

Un troisième mode de réalisation d'un réseau selon l'invention est représenté à titre d'exemple sur la figure 7. Il s'agit d'un réseau interconnectant deux anneaux fédérateurs A1 et A2, tels que celui décrit sur la figure 5, par l'intermédiaire d'un équipement de réseau selon l'invention C4. Un identificateur VPI est alors attribué à chaque équipement, les abonnés des différents services étant distingués par un identificateur VCI qui leur est propre. Il est par exemple particulièrement avantageux de réserver dans chaque identificateur VCI un ou plusieurs éléments binaires (selon le nombre d'anneaux du réseau) pour indiquer à quel anneau appartient l'abonné correspondant. L'équipement d'interconnexion C4 dispose alors d'une table de routage permettant de brasser les communications d'un anneau à l'autre.

Dans ce type de configuration, l'équipement d'interconnexion C4 extrait des trames de transport véhiculées sur l'anneau A1 (respectivement A2) les cellules qui sont à destination des services qu'il gère et celles qui sont à destination de l'anneau A2 (respectivement A1). Il dispose de deux séries de mémoires d'émission et de réception pour stocker les cellules à destination ou en provenance des anneaux A1 et A2 respectivement. Deux droit minimum d'émission lui sont garantis pour l'insertion de cellules dans les trames véhiculées par les anneaux A1 et A2 respectivement.

Cette configuration est particulièrement efficace lorsqu'on regroupe sur un même anneau fédérateur les services qui ont le plus d'échanges entre eux.

La figure 8 enfin donne, à titre d'exemple, une représentation du concentrateur C3 de la figure 5. Un tel équipement comporte d'une part des modules d'interconnexion M1, M2 et M3 vers les services S1, S2 et S3 et d'autre part un module d'interconnexion M4 vers l'anneau ATM. Il comporte également un module M5 de supervision de l'ensemble desdits modules. Ce module M5 est relié à un PC externe de gestion du concentrateur. Ces modules sont reliés entre eux par au moins un bus de données BUS. Ces modules sont réalisés à base d'un processeur M30 (par exemple un M68040 de Motorola). Seul le module M4 est détaillé sur la figure: il comporte un microprocesseur proprement dit M31, une mémoire morte M32 contenant notamment les instructions nécessaires à la mise en oeuvre de l'invention sous forme logicielle, et une mémoire vive M33 qui contient notamment la mémoire d'émission ME et la mémoire de réception MR du concentrateur.

Il est bien entendu que l'invention n'est pas limitée aux modes de réalisation qui viennent d'être décrits. Elle s'applique de façon générale à tout système d'interconnexion d'équipements de réseaux au moyen d'un anneau.

**Revendications**

1. Réseau comportant une pluralité d'équipements de réseaux interconnectés par un anneau qui véhicule des trames de transport d'unités de données à un débit qui détermine la capacité de l'anneau, ladite capacité se composant d'une partie utilisée et d'une partie inutilisée,

caractérisé en ce qu'il comporte:

- des moyens pour faire circuler sur l'anneau une information représentative de la partie utilisée de la capacité de l'anneau, et mise à jour par lesdits équipements,
- des moyens pour accorder auxdits équipements un droit d'émission qui dépend notamment de la partie inutilisée de la capacité de l'anneau.

2. Réseau selon la revendication 1, caractérisé en ce qu'il comporte des moyens pour répartir la capacité de l'anneau entre équipements:

- en attribuant à chaque équipement un droit minimun d'émission,
- en répartissant la partie inutilisée de la capacité de l'anneau entre les équipements en fonction d'une loi de partage entre équipements.

3. Réseau selon la revendication 2, caractérisé en ce que, ladite information est égale à la somme des droits minimum d'émission des équipements actifs, et en ce que lesdits équipements comportent des moyens pour mettre à jour ladite information dans chacune des trames circulant sur l'anneau lorsqu'ils passent d'un état inactif à un état actif en y ajoutant leur droit minimum d'émission, et réciproquement lorsqu'ils passent d'un état actif à un état inactif en en soustrayant leur droit minimum d'émission.

4. Réseau selon l'une des revendications 2 ou 3, caractérisé en que lesdits équipements comportent:

- des moyens pour recevoir une trame de transport,
- des moyens pour en extraire ladite information,
- des moyens pour insérer dans ladite trame un nombre d'unités de données à transmettre qui est égal à la somme d'un premier nombre d'unités de données correspondant au droit minimum d'émission qui leur est attribué, et d'un second nombre d'unités de données qui leur est attribué de façon supplémentaire par application de ladite loi de partage de la partie inutilisée de la capacité de l'anneau.

5. Réseau selon l'une des revendications 2 à 4, caractérisé en ce que ladite loi de partage est une loi de répartition proportionnelle entre les équipements en fonction de leur droit minimum d'émission.

6. Réseau selon l'une des revendications 1 à 5, caractérisé en ce qu'un équipement de réseau au moins est un concentrateur de services qui comporte des moyens pour répartir le nombre d'unités de données à insérer dans chaque trame de transport entre les différents services proportionnellement à leur débit de transmission, les unités de données inutilisées par un service étant remis à disposition des autres services.

7. Procédé de gestion de l'accès à un anneau d'interconnexion d'une pluralité d'équipements de réseaux, ledit anneau véhiculant des trames de transport d'unités de données à un débit qui détermine la capacité de l'anneau, ladite capacité se composant d'une partie utilisée et d'une partie inutilisée, caractérisé en qu'il consiste à

- faire circuler sur l'anneau une information représentative de la partie utilisée de la capacité de l'anneau, mise à jour par lesdits équipements,
- accorder auxdits équipements un droit d'émission qui dépend notamment de la partie inutilisée de la capacité de l'anneau.

8. Procédé selon la revendication 7, caractérisé en ce qu'il consiste notamment à répartir la capacité de l'anneau entre équipements :

- en attribuant à chaque équipement un droit minimum d'émission,
- en répartissant la partie inutilisée de la capacité de l'anneau entre équipements en fonction d'une loi de partage entre équipements.

9. Equipement de réseau destiné à être interconnecté avec au moins un autre équipement de réseau par un anneau qui véhicule des trames de transport d'unités de données à un débit qui détermine la capacité de l'anneau, ladite capacité se composant d'une partie utilisée et d'une partie inutilisée, caractérisé en ce qu'il comporte:

- des moyens de mise à jour d'une information représentative de la partie utilisée de la capacité de l'anneau, véhiculée dans les trames circulant sur l'anneau,
- des moyens pour déterminer le nombre d'unités de données qu'il est autorisé à transmettre, ce nombre dépendant notamment de la partie inutilisée de la capacité de l'anneau.

10. Equipement selon la revendication 9, caractérisé en ce qu'il comporte des moyens pour former le nombre d'unités de données qu'il est autorisé à transmettre à partir de la somme d'un premier nombre d'unités de données correspondant à un droit minimum d'émission qui lui est attribué, et d'un second nombre d'unités de données qui lui est attribué de façon supplémentaire par application d'une loi de partage entre équipements de la partie inutilisée de la capacité de l'anneau.

FIG.1

FIG.5

FIG.7

LER(I) = CRED (I) + NC . Q (I)  — 101

102 — LER (I) < 1 ?

N

CPT(I) = E [ LER (I) ]  — 104

MEj(I) ≠ ∅  — 105

Y        N

CRED(I)=CRED(I)-CPT(I)  — 106

CRED(I)=0  — 107

MEj(I) ≠ ∅  — 100

Y                N

108

CRED (I) = O

Y

CRED(I)=CRED(I)+LER(I)

109

I++

## FIG.6

## FIG.2

t  — 1

TC  — 2

MEj ≠ ∅  — 3

NC  — 4

5

6

7

8

9

FIG.3

EP 0 765 056 A1

FIG.4

FIG.8

Office européen
des brevets

**RAPPORT DE RECHERCHE EUROPEENNE**

Numero de la demande

EP 96 20 2558

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 354 572 (OMRON TATEISI ELECTRONICS CO.) | 1,7,9 | H04L12/433 |
| Y | | 2,4,6,8, 10 | |
| | * colonne 5, ligne 11 - colonne 6, ligne 5 * | | |
| | * colonne 1, ligne 42 - ligne 54 * | | |
| | * figure 7 * | | |
| | --- | | |
| Y | EP-A-0 459 756 (ADVANCED MICRO DEVICES INC.) * revendications * | 2,4,6,8, 10 | |
| | --- | | |
| A | US-A-5 001 707 (R. KOSITPAIBOON ET AL.) * abrégé * * colonne 1, ligne 19 - colonne 2, ligne 14 * * revendication 1 * | 1,7,9 | |
| | --- | | |
| A | US-A-5 313 466 (ZHAO WEI ET AL) 17 Mai 1994 * le document en entier * | 1-10 | **DOMAINES TECHNIQUES RECHERCHES (Int.Cl.6)** |
| | ----- | | H04L |

Le présent rapport a été établi pour toutes les revendications

| Lieu de la recherche | Date d'achèvement de la recherche | Examinateur |
|---|---|---|
| LA HAYE | 2 Décembre 1996 | Perez Perez, J |

EPO FORM 1503 03.82 (P04C02)